# EUROPEAN PATENT SPECIFICATION

(11) **EP 0 564 545 B1**
(45) Date of publication and mention of the grant of the patent: **20.11.1996**
(21) Application number: 92902425.5
(22) Date of filing: 18.12.1991
(51) Int. Cl.: C08K 5/523, C08K 5/5333, C08L 67/02, C08L 69/00, C08L 79/08

(54) **FLAME RETARDANT POLYMER COMPOSITION CONTAINING POLYBUTYLENE TEREPHTHALATE AND AN AROMATIC POLYCARBONATE OR A POLYETHERIMIDE**
FLAMMGESCHÜTZTE POLYMERMISCHUNG AUS POLYBUTYLENTEREPHTHALAT UND EINEM AROMATISCHEN POLYCARBONAT ODER EINEM POLYETHERIMID
COMPOSITION POLYMERE RETARDATEUR DE FLAMME COMPRENANT UN TEREPHTALATE DE POLYBUTYLENE ET UN POLYCARBONATE AROMATIQUE OU UN POLYETHERIMIDE

(30) Priority: 24.12.1990 EP 90125465
(43) Date of publication of application: 13.10.1993
(73) Proprietor: GENERAL ELECTRIC PLASTICS B.V., NL-4612 PX Bergen op Zoom (NL)
(72) Inventor: DE WIT, Gerrit, NL-4641 RX Ossendrecht (NL); TABANKIA, Farshid, F-60155 Rainvillers (FR)
(74) Representative: Grever, Frederik
(86) International application number: NL9100266
(87) International publication number: WO9211314

(56) References cited:
- EP-A- 0 133 641
- EP-A- 0 294 862
- EP-A- 0 363 608
- EP-A- 0 386 916
- WO-A-87/04447
- US-A- 4 203 888

## Description

The invention relates to a polymer composition, containing (1) a blend of a polybutylene terephthalate and an aromatic polycarbonate or a blend of a polybutylene terephthalate and a polyetherimide (2) at least one flame retardant agent. with the formula 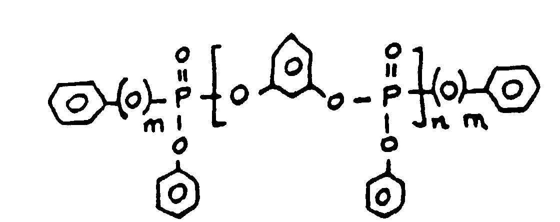 wherein n has an average value of 0,5-4, m is 0 or 1, and the phenyl nuclei may be substituted with lower alkyl or alkoxy groups.

EP-A-0 386 916 describes a flame-retardant polyester resin composition comprising a thermoplastic polyester resin like polybutylene terephthalate, an organic halogenated flame retardant, an inorganic filler and a phosphoric ester which may correspond with the above given formula. However, flame retardants of the present resorcinol-type are not specifically disclosed; only phosphoric esters of the hydroquinone-type are specifically mentioned. It is further stated that other polymers like polyamides, polycarbonate, ABS, polyphenylene oxide, polyphenylene sulfide, polyalkyl acrylate, polyacetal, polysulfone, polyether sulfone, polyetherimide, polyether ketone, phenoxy resin or fluororesin may be incorporated in a small amount "so far as the object of the present invention is not damaged".

It has now surprisingly been found that the addition of some of the above-mentioned polymers, i.e. aromatic polycarbonates and polyetherimides, in substantial amounts improve the so-called flame-out time, whereas others, i.e. polyphenylene oxides increase the flame-out time.

EP-A-0 133641 discloses in Examples 11, 12 and 15 a composition, containing poly(1,4-butylene terephthalate), poly(2,6-dimethyl-1,4-phenylene ether), an oligomeric polycarbonate of tetrabromo bisphenol-A and bis diphenyl phosphate of recorcinol. As stated hereinabove, compositions of this type are excluded from the present application. Poly(2,6-dimethyl-1,4-phenylene ether) used in this reference, increases the flame-out time which is clearly undesirable.

Accordingly. a polymer composition is provided which contains
(1) 40-90 parts by weight of polybutylene terephthalate, in combination with 60-10 parts by weight of an aromatic polycarbonate or of a polyetherimide;
(2) a flame retardant agent and
(3) if desired further usual additives, wherein the flame retardant agent has the formula 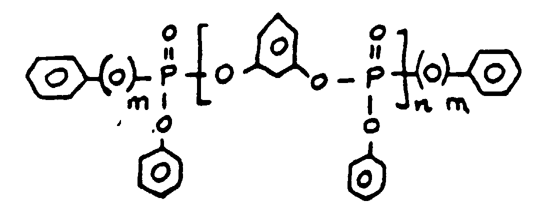 wherein n has an average value of 0.5-4, m is 0 or 1, and the phenyl nuclei may be substituted with lower alkyl or alkoxy groups: excluding the compositions wherein a polyphenyle ether is present in combination with a blend of polybutylene terephthalate and a polycarbonate.

The flame retardant agents used according to the present invention are compounds which are known per se, and some of them are commercially available. If n in the above formula is zero, the formula would represent triphenyl phosphate. However, in order to be sufficiently effective. the flame retardant should contain a certain minimum amount of resorcinyl compound and for this reason n has a minimum value of 0.5. The products wherein n has an average value of more than 1 are also effective flame retardants, but when n has an average value of more than 4, some of the physical properties of the composition will tend to deteriorate so that the product no longer would be acceptable.

The main component of the flame retardant usually is the compound, wherein n is 1, i.e. tetraphenyl-resorcinyl-diphosphate, wherein the phenyl groups may be substituted as mentioned hereinabove. It should be remarked that a corresponding hydroquinone compound was tested, and appeared ineffective as flame retardant agent in the present systems. A test with triphenylphosphine oxide also was unsuccessful; apparently, phenyl groups are not as efficient for the flame retardant activity as phenoxy groups.

The flame retardant agent of the present invention should be used in flame retardant amounts. Normally, these are amounts of 3 to 30 % by weight of the entire composition. The exact amount will depend on the desired flame retardant properties and on the nature and amounts of other components present in the composition besides the PBT and the present flame retardant agent.

As examples of usual additives which may also be present in the composition of the invention can be mentioned fillers, reinforcing fibers, stabilizers, dyes and pigments, plasticizers, mold release agents, lubricants and antistatic agents, as well as further flame retardant agents and drip inhibitors like fluorinated polyalkylenes.

As examples of further flame retardant agents can be mentioned flame-retardant salts, especially sulphonate salts, which often are used in polycarbonate compositions and which can also be used in the present case, if the polymer component contains a considerable amount of polycarbonate. Furthermore perfluoro alkane polymers; phosphorous acid or phosphites; synergistic metal compounds, and of course also chlorine and/or bromine containing flame retardant compounds, although these halogen compounds in many cases are less preferred because of their environmental effects and their possible implications for the other properties of the polymer composition. However, in small amounts these halogen-containing flame retardants can be tolerated.

The present invention is further elucidated with the aid of the following examples, which, however, should not be construed to limit the invention in any way.

### Example 1

The following materials were used: polybutylene terephtalate (PBT) having an intrinsic viscosity (IV) of 0.12 dl/g, measured in a 60/40 phenol/tetrachloro ethane solution at 25 degrees C; polycarbonate (PC) derived from bisphenol A and phosgene having an intrinsic viscosity of 0.58 dl/g, measured in a methylene chloride solution at 25 degrees C; polyphenylene oxide (PPE) with an intrinsic visosity of 0.46 dl/g as measured in chloroform and a flame retardant agent with formula as represented in claim 1,
wherein n has an average value of 1.3 and m=1. The main component thereof is resorcinol diphosphate, and therefore this agent is abbreviated hereinafter as RDP, it being understood that it is in fact a mixture of compounds of the above formula with various values of n.

All the materials were compounded on a twin screw extruder under the standard extrusion conditions for PBT.

Four compositions were prepared and tested four their burning behaviour in accordance with the UL-94 test. The compositions and the obtained properties are indicated in the following table A.

**TABEL A**

| Components | I | II | III | IV |
|---|---|---|---|---|
| PBT | 84.9 | 69.9 | 69.9 | 69.4 |
| PC | - | 15 | - | 15 |
| hindered phenol | 0.15 | 0.15 | 0.15 | 0.15 |
| RDP | 15 | 15 | 15 | 15 |
| PPE | - | - | 15 | - |
| Drip inhibitor (1) | - | - | - | 0.5 |

| Properties | | | | |
|---|---|---|---|---|
| MVI (2) 250 C/21.6N, 4min (cc/10') | 10.2 | 10.1 | 8.9 | 11.3 |
| UL-94(1.6mm) | V2 | V2 | V2 | V0 |
| Flame out time (sec.) | 9 | 4 | 19 | 3 |
| Vicat B/120 (C) | 157 | 136 | 152 | 142 |
| 1) 20% polytetrafluoroethylene in polycarbonate (IV=0.55) 2) Melt Vicosity Index 3) ASTM-D1525 | | | | |

As can be seen from the reported results the addition of a polycarbonate (composition II) greatly reduces the flame-out time of composition I , whereas the addition of a polyphenylene ether (composition III) results in an increase of the flame-out time. By adding a small amount of a poly(tetrafluoro- ethylene) one can get a V0 rating for the UL-94 test.

### Example 2

The following materials were used: polybutylene terephtalate (PBT) having an intrinsic viscosity (IV) of 0.12 dl/g, measured in a 60/40 phenol/tetrachloro ethane solution at 25°C; polycarbonate (PC) derived from bisphenol A and phosgene having an intrinsic viscosity of 0.58 dl/g measured in a methylene chloride solution at 25°C; hindered phenol as anti-oxidant and a flame retardant i.e. the same RDP as in example 1.

All the materials were compounded on a twin screw extruder under the standard extrusion conditions for PBT.

Four compositions were prepared and tested for their burning behaviour. The UL-94 rating was determined according to Underwriters Laboratory procedure. The Glow Wire Test (IEC 695-2-1) has been abbreviated as GWT. The compositions and the obtained results are indicated in the following Table B.

**TABLE B**

| | COMPOSITION | | | |
|---|---|---|---|---|
| Components | I | II | III | IV |
| PBT | 89.85 | 79.85 | 74.85 | 69.85 |
| PC | 10 | 10 | 15 | 15 |
| hindered phenol | 0.15 | 0.15 | 0.15 | 0.15 |
| RDP | - | 10 | 10 | 15 |

| Properties | | | | |
|---|---|---|---|---|
| UL-94 (1.6 mm) | V2 | V2 | V2 | V2 |
| Flame out time (sec) | >60 | 4 | 2 | 3 |
| Dripping | + | + | + | + |
| GWT (960°C) | Fail | Fail | Fail | Pass |

As appears from the above Table, the flame out time, determined in accordance with UL-94, is dramatically reduced in the present compositions, and is less than 10 sec, which is in the VO rating range. In spite thereof all the materials are rated V2, since dripping occurs in the early moments of burning. However, dripping can be dealt with by minor changes in the other components, and the purpose of the present example was only to show the excellent flame retardant effect of the present compositions. It should also be noted that by increasing the amount of RDP (composition IV), the material even passes the GWT test at 960°C.

### Example 3

In order to improve the UL-ratings, variations in the compositions of example 1 were tested, and in this case a PC of higher IV (64) was used. The tested compositions and properties are indicated in Table C.

**TABLE C**

| Composition | I | II |
|---|---|---|
| PBT | 59.8 | 44.3 |
| PC | 40 | 40 |
| RDP | - | 15 |
| Hindered phenol | 0.15 | 0.15 |
| 45 % H3PO3 | 0.06 | 0.06 |
| Drip inhibitor (1) | - | 0.5 |

| Properties | | |
|---|---|---|
| MVI (2) (250°C/21.6N) | 8.8 | 20 |
| UL-94 (1,6 mm) | V2 | V0 |
| Flame Out Time (sec.) | >60 | 2 |
| Oxygen Index (%) | 19 | 36 |
| Glow Wire Test (960°C) | fail | pass |
| CTI (4) (KC), volts | 600 | 600 |
| (4) comparative tracking index | | |

It follows from the above results that selection of a suitable stabilization package and of a higher molecular PC allows the attaining of an UL rating of V0. This is attained with maintenance of the high CTI value.

### Example 4

Tetraxylyl-resorcinyl diphosphate (RDPX) of the formula: 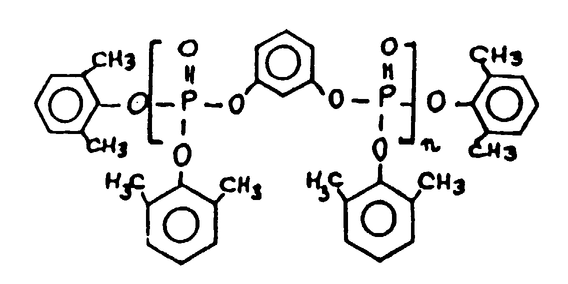 wherein n has an average value of 1, was examined as an alternative for RDP. The PBT in this example was the same as in examples 2 and 3 and the PC was the same as in example 3. Not only the flame retardant properties, but also the most important physical properties of the compositions were tested. The results were presented hereinafter in Table D.

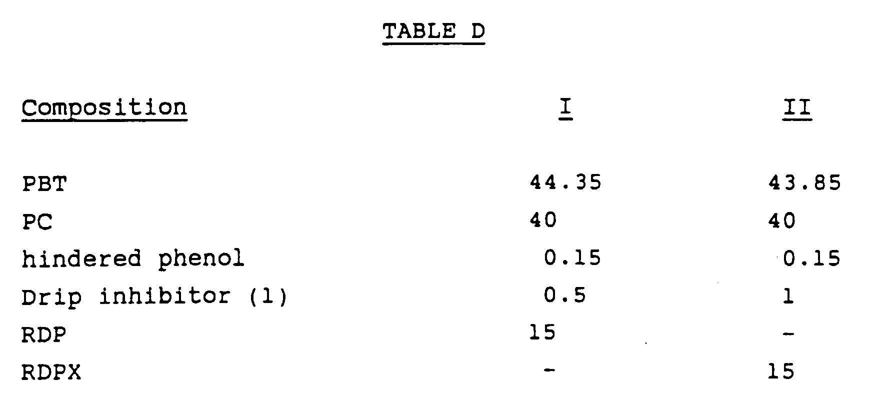

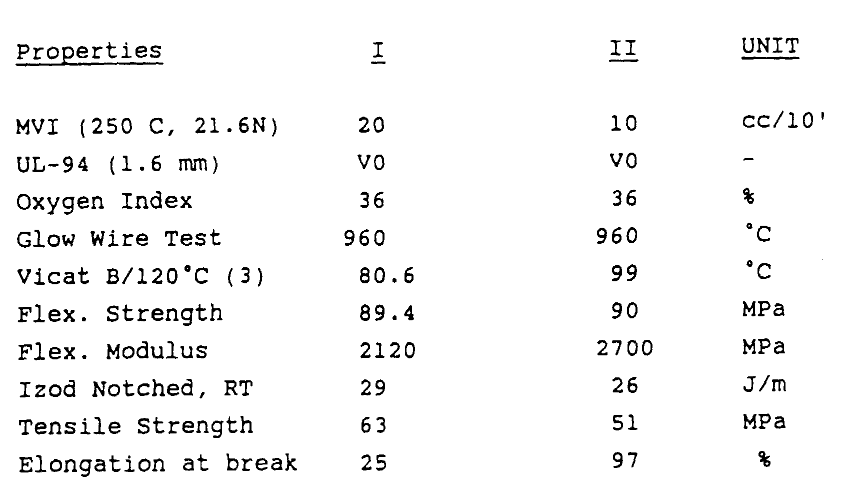

As appears from Table D, both flame retardants have the desired excellent flame retarding effect, and - as expected - offer the possibility of producing compositions of varying physical properties. Thus, composition II shows a considerable increase in heat distortion temperature and stiffness.

### Example 4

In this example compositions containing blends of PBT and polyetherimide (PEI) in various weight ratios were tested. Such blends are known from U.S.-A-4,141,927. The PBT used was the same as used in the previous examples and a PEI was used having a IV of 1,1. The compositions and test results are given hereinbelow in Table E.

**TABLE E**

| Composition | I | II | III | IV | V | VI |
|---|---|---|---|---|---|---|
| PBT | 69.7 | 59.45 | 49.45 | 47 | 45.8 | 44.5 |
| PEI | 30 | 40 | 50 | 47.5 | 46.2 | 45 |
| hindered phenol | 0.3 | 0.3 | 0.3 | 0.3 | 0.3 | 0.3 |
| Drip inhibitor | - | 0.25 | 0.25 | 0.25 | 0.25 | 0.25 |
| RDP | - | - | - | 5 | 7.5 | 10 |

| Properties | | | | | | |
|---|---|---|---|---|---|---|
| UL-94 (3.2mm) | V2 | V2 | V2 | V2 | V0 | V0 |
| Flame Out Time (sec) | 60 | 58 | 32 | 5.2 | 2.8 | 2 |
| Dripping | yes | yes | yes | yes | no | no |
| Glow Wire Test (960°C) | fail | fail | pass | pass | pass | pass |

It should be remarked that PBT and PEI are fully miscible, when they are used in approximately the same amounts, as is the case in compositions 3-6. Such a blend exhibits one Tg at 132° C and has a reduced flame out time in the flammability test, compared to straight PBT. Due to this a V0 rating can already be obtained with lower amounts of RDP.

## Claims

1. Polymer composition, containing (1) a blend of 40-90 parts by weight of polybutylene terephthalate and 60-10 parts by weight of an aromatic polycarbonate per 100 parts by weight of the two polymers taken together or a blend of 40-90 parts by weight of polybutylene terephthalate and 60-10 parts by weight of polyether imide per 100 parts by weight of the two polymers taken together. and (2) at least one flame retardant agent having the formula 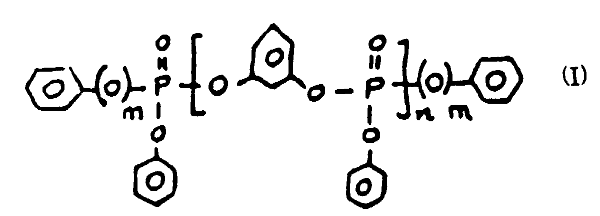 wherein n has an average value of 0.5-4, m is 0 or 1 and the phenyl nuclei may be substituted with lower alkyl or alkoxy groups: excluding the compositions wherein a polyphenylene ether resin is present in combination with a blend of polybutylene terephthalate and a polycarbonate.

2. Polymer composition according to claim 1. further containing (3) at least one usual additive for polymer blends.

3. Polymer composition according to claims 1 or 2. wherein n in the formula has a value of 0.8-2 and the phenyl nuclei are unsubstituted.

4. Polymer composition according to any of claims 1-3, wherein n in the formula has a value of 0.8-2 and each of the phenyl nuclei has two methyl substituents.

5. Polymer composition according to any of claims 1-4. wherein component (2) constitutes 3-20 weight % of the entire composition.

6. Polymer composition according to claim 5. wherein component (2) constitutes 5-15 % of the composition.

7. Polymer composition according to claim 1. wherein the composition further comprises a fluorinated polyalkylene.

8. Objects formed out of the polymer composition according to claim 1.

## Patentansprüche

1. Polymerzusammensetzung, enthaltend
(1) eine Mischung von 40-90 Gewichtsteilen Polybutylenterephthalat und 60-10 Gewichtsteilen eines aromatischen Polycarbonats pro 100 Gewichtsteile der zwei Polymere zusammengenommen oder eine Mischung von 40-90 Gewichtsteilen Polybutylenterephthalat und 60-10 Gewichtsteilen Polyätherimid pro 100 Gewichtsteile der zwei Polymere zusammengenommen, und
(2) wenigstens ein flammhemmendes Mittel mit der Formel 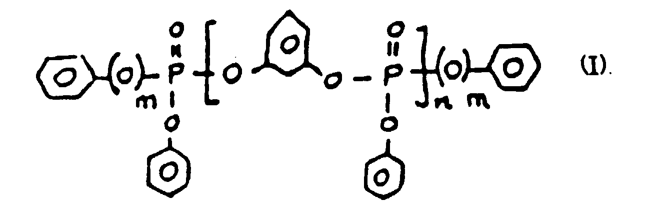 worin n einen Mittelwert von 0,5-4 hat, m 0 oder 1 ist und die Phenylkerne mit niederen Alkyl-oder Alkoxygruppen substituiert werden können; unter Ausschluß der Zusammensetzungen, worin ein Polyphenylenätherharz in Kombination mit einer Mischung von Polybutylenterephthalat und einem Polycarbonat anwesend ist.

2. Polymerzusammensetzung gemäß Anspruch 1, die weiter (3) wenigstens ein gewöhnliches Additiv für Polymermischungen enthält.

3. Polymerzusammensetzung gemäß Ansprüchen 1 oder 2, worin n in der Formel einen Wert von 0,8-2 hat und die Phenylkerne nicht substituiert sind.

4. Polymerzusammensetzung gemäß einem der Ansprüche 1-3, worin n in der Formel einen Wert von 0,8-2 hat und jeder der Phenylkerne zwei Methylsubstituenten hat.

5. Polymerzusammensetzung gemäß einem der Ansprüche 1-4, worin Komponente (2) 3-20 Gewichts-% der gesamten Zusammensetzung bildet.

6. Polymerzusammensetzung gemäß Anspruch 5, worin Komponente (2) 5-15% der Zusammensetzung bildet.

7. Polymerzusammensetzung gemäß Anspruch 1, worin die Zusammensetzung weiter ein fluoriertes Polyalkylen umfaßt.

8. Gegenstände, ausgeformt aus der Polymerzusammensetzung gemäß Anspruch 1.

## Revendications

1. Composition de polymères contenant (1) un mélange de 40 à 90 parties en poids de poly(butylène téréphtalate) et de 60 à 10 parties en poids d'un polycarbonate aromatique pour 100 parties en poids des deux polymères pris ensemble, ou un mélange de 40 à 90 parties en poids de poly(butylène téréphtalate) et de 60 à 10 parties en poids de polyétherimide pour 100 parties en poids des deux polymères pris ensemble, et (2) au moins un agent retardateur de flamme répondant à la formule : 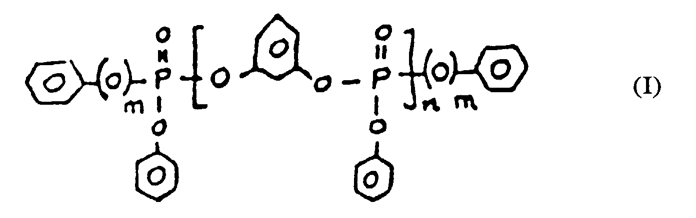 dans laquelle n a une valeur moyenne comprise entre 0,5 et 4, m vaut 0 ou 1 et les noyaux phényle peuvent être substitués par des groupes alcoxy ou alkyle inférieurs ; ne comprenant pas des compositions dans lesquelles une résine poly(phénylène éther) est présente en combinaison avec un mélange de poly(butylène téréphtalate) et de polycarbonate.

2. Composition de polymères conforme à la revendication 1, contenant en outre (3) au moins un additif courant pour les mélanges de polymères.

3. Composition de polymères conforme à la revendication 1 ou 2, dans laquelle n, dans la formule, a une valeur comprise entre 0, 8 et 2, et les noyaux phényle ne sont pas substitués.

4. Composition de polymères conforme à l'une quelconque des revendications 1 à 3, dans laquelle n, dans la formule, a une valeur comprise entre 0,8 et 2, et chaque noyau phényle porte deux substituants méthyle.

5. Composition de polymères conforme à l'une quelconque des revendications 1 à 4, dans laquelle le composant (2) constitue 3 à 20 % en poids de la composition totale.

6. Composition de polymères conforme à la revendication 5, dans laquelle le composant (2) constitue 5 à 15 % en poids de la composition.

7. Composition de polymères conforme à la revendication 1, dans laquelle la composition comprend en outre un polyalkylène fluoré.

8. Objets formés à partir de la composition de polymères conforme à la revendication 1.
